# EUROPÄISCHE PATENTSCHRIFT

(11) **EP 3 109 169 B1**
(45) Veröffentlichungstag und Bekanntmachung des Hinweises auf die Patenterteilung: **21.03.2018**
(21) Anmeldenummer: 15173521.4
(22) Anmeldetag: 24.06.2015
(51) Int. Cl.: B64F 1/30, B64F 1/305

(54) **ZUGANGSTUNNEL ZU EINEM FLUGZEUG**
ACCESS TUNNEL TO AN AIRCRAFT
TUNNEL D'ACCES A UN AVION

(43) Veröffentlichungstag der Anmeldung: 28.12.2016
(73) Patentinhaber: Hübner GmbH & Co. KG, 34123 Kassel (DE)
(72) Erfinder: Gutkuhn, Detlef, 34314 Espenau (DE); Mander, Kai, 34466 Wolfhagen (DE); Scharf, Lothar, 37242 Bad Sooden-Allendorf (DE); Benkhoff, Herrmann, 37115 Duderstadt (DE); Hübner, Reinhard, 34130 Kassel (DE)
(74) Vertreter: Patentanwälte Walther Hinz Bayer PartGmbB

(56) Entgegenhaltungen:
- WO-A1-01/88274
- DE-A1- 3 504 513
- FR-A1- 2 886 624

## Beschreibung

Die Erfindung betrifft einen Zugangstunnel zu einem Flugzeug, umfassend mehrere Tunnelelemente, die miteinander verschieblich in Verbindung stehen.

Ein Zugangstunnel der eingangs genannten Art zu einem Flugzeug, beispielsweise von einem parkenden Bus oder auch von einem Gebäudeteil aus, ist aus dem Stand der Technik hinreichend bekannt. Solche Zugangstunnel werden eingesetzt, wenn Passagieren der Zugang von einem zum Rollfeld ebenerdig gelegenen Ausgang eines Gebäudes zum Flugzeug ermöglicht werden soll, ohne Witterungseinflüssen ausgesetzt zu sein. Solche Zugangstunnel sind, wie bereits ausgeführt, bekannt.

Aus dem Stand der Technik gemäß beispielsweise der PCT/DE2013/000513 ist ein Zugangstunnel bekannt, der mehrere Tunnelelemente aufweist, wodurch der Zugangstunnel an die erforderliche Länge anpassbar ist. Im Einzelnen ist aus dieser Literaturstelle bekannt, um die einzelnen Tunnelelemente gegen Verschmutzung und auch gegen Witterungseinflüsse insgesamt zu schützen, zwei Tunnelelemente ineinander zu verschieben. Im Einzelnen ist hierbei vorgesehen, dass ein im Wesentliches starres Tunnelelement als Grundelement mindestens ein weiteres ziehharmonikaförmiges ausgebildetes Tunnelelement zur Verlängerung aufweist, wobei das im Wesentlichen starre Tunnelelement als Grundelement das ziehharmonikaförmige Tunnelelement nach Art einer Garage in sich aufnehmen kann.

Auch aus der FR 2 886 624 A ist ein Zugangstunnel zu einem Flugzeug bekannt, der sowohl mehrere teleskopierbare Tunnelelemente als auch endseitig zwei starre Tunnelelemente aufweist, die als Führungselemente beim Verfahren des Zugangstunnels dienen sollen. Somit ist der dort beschriebene Zugangstunnel in seiner Länge variabel. Das heißt, der Platzbedarf des Zugangstunnels auf dem Flughafenvorfeld ist veränderbar.

Aus der WO 01/88274 ist ebenfalls ein Zugangstunnel zu einem Flugzeug bekannt, wobei einzelne Tunnelelemente teleskopierbar miteinander in Verbindung stehen. Nachteilig hieran ist, dass wenn eine Mehrzahl derartiger Tunnelelemente teleskopierbar miteinander in Verbindung stehen, die lichte Durchgangsweite über die Länge des Tunnelelementes immer weiter abnimmt. Das heißt, die Anzahl der in solcher Art und Weise verbundenen Tunnelelemente ist durchaus beschränkt. Darüber hinaus hat sich weiterhin als nachteilig herausgestellt, dass bedingt durch die Führung der einzelnen ineinander ein erheblicher Kraftbedarf erforderlich ist, um die einzelnen Tunnelelemente zur Bildung des Zugangstunnels auseinanderzuziehen. Dies deshalb, weil, wie bereits ausgeführt, die Gestelle der einzelnen Tunnelelemente miteinander geführt in Verbindung stehen.

Die der Erfindung zugrunde liegende Aufgabe besteht darin, eine Mehrzahl von Tunnelelementen derart zu verbinden, dass diese platzsparend ineinander gelagert werden können, ohne dass die lichte Durchgangsweite mit der Anzahl der Tunnelelemente abnimmt.

Zur Lösung der Aufgabe wird erfindungsgemäß vorgeschlagen, dass eine Mehrzahl der Tunnelelemente in Richtung der Längsachse eines jeden Tunnelelementes konisch zulaufend ausgebildet sind, sodass die Tunnelelemente ineinanderschiebbar sind. Hieraus wird deutlich, dass sämtliche der Tunnelelemente gleich ausgebildet sind, also jedes Tunnelelement zu beiden Enden jeweils die gleiche lichte Durchgangsweite aufweist, wobei ein jedes Tunnelelement an einem Ende allerdings eine größere Durchgangsweite aufweist, als am gegenüberliegenden Ende. Hieraus ergibt sich die bereits zuvor genannte konische Ausbildung der Tunnelelemente. Diese konische Ausbildung der Tunnelelemente bewirkt allerdings, dass die einzelnen Tunnelelemente ähnlich wie Einkaufswagen zur platzsparenden Lagerung ineinander verschieblich sind.

Vorteilhafte Merkmale und Ausgestaltungen zu der Erfindung ergeben sich aus den Unteransprüchen.

So ist nach einem besonderen Merkmal der Erfindung vorgesehen, dass die frei relativ zueinander verschieblich sind. Dies bedeutet, dass die einzelnen Tunnelelemente nicht beispielsweise durch Führungen miteinander in Verbindung stehen, sondern beinahe in jeder Stellung relativ zueinander frei beweglich sind. Dies ist auch durch die konische Ausbildung der Tunnelelemente bedingt. Um nun in diesem Zusammenhang zu verhindern, dass die Tunnelelemente derart auseinandergezogen werden können, dass diese Tunnelelemente jedes für sich freisteht, ist vorgesehen, dass die Tunnelelemente zur Begrenzung des Auszugs durch Seile, Ketten oder Ähnliches in Längsrichtung verlaufend miteinander verbunden sind. Das heißt, die einzelnen Tunnelelemente sind nicht ineinander geführt, sie sind lediglich zur Begrenzung des Auszugs durch die zuvor beschriebenen beispielsweise Seile miteinander verbunden, sodass der Kraftaufwand zum Auseinanderziehen der Tunnelelemente minimal ist.

Im Einzelnen umfasst das Tunnelelement ein Gestell, auf dem eine Verkleidung angeordnet ist, wobei die Verkleidung im Dach bogenförmig gestaltet ist. In diesem Zusammenhang weist das Gestell zu beiden Enden einen torbogenförmigen Rahmen auf, wobei zur konischen Ausbildung des Tunnelelementes der eine torbogenförmige Rahmen in Bezug auf den Umfang kleiner ist, als der andere torbogenförmige Rahmen. Unter einem torbogenförmigen Rahmen wird ein solcher verstanden, der zwei im Wesentlichen vertikal ausgerichtete Schenkel aufweist, die im Dachbereich des Tunnelelementes durch einen bogenförmigen Steg miteinander verbunden sind, sodass der torbogenförmige Rahmen in der Ansicht im Wesentlichen U-förmig ausgebildet ist.

Um zu verhindern, dass im auseinandergezogenen Zustand der Tunnelelemente und dem damit einhergehenden radialen Abstand aufgrund der konischen Ausbildung der Tunnelelemente, in das Innere des durch die Tunnelelemente gebildeten Zugangstunnels Wasser eindringt, weist der im Umfang größere torbogenförmige Rahmen eine entsprechend torbogenförmige Abdichtung zu dem benachbarten Tunnelelement auf. Die torbogenförmige Abdichtung ist flexibel gestaltet, um beim Zusammenschieben der Tunnelelemente oder deren Auseinanderziehen die Dichtigkeit durch die Abdichtung zu gewährleisten. Nach einem besonderen Merkmal ist in diesem Zusammenhang vorgesehen, dass die torbogenförmige Abdichtung zumindest im Dachbereich des Tunnelelementes elastisch ausgebildet ist. Unter elastisch wird verstanden, dass die Abdichtung im Dachbereich ähnlich einem Gummiband ausgebildet ist. Vorteilhaft ist in diesem Zusammenhang des Weiteren vorgesehen, dass die elastisch ausgebildete torbogenförmige Abdichtung im Dachbereich des Tunnelelementes unter Spannung auf der Verkleidung des benachbarten Tunnelelementes aufliegt, um ein Höchstmaß an Dichtigkeit gegenüber eindringender Feuchtigkeit zu gewährleisten. Die Abdichtung im Bereich der Schenkel des torbogenförmigen Rahmens ist hierbei lediglich flexibel nach Art eines Tuchs ausgebildet, das verhindert, dass bei Schlagregen Wasser zwischen den vertikalen Seitenflächen zweier benachbarter eintritt.

Als besonders haltbar hat sich eine Abdichtung herausgestellt, die einen zumindest zu einer Seite mit einem Elastomer beschichteten Festigkeitsträger aufweist; dass heißt, dass die torbogenförmige Abdichtung z. B. nach Art einer Kunststoffplane aus einem mit einem Elastomer beschichteten Gewebe besteht.

Nach einem besonderen Merkmal der Erfindung ist weiterhin vorgesehen, dass der im Umfang kleinere torbogenförmige Rahmen zwei im Wesentlichen vertikal verlaufende Schenkel aufweist, an denen jeweils eine Leiteinrichtung für durch den Zugangstunnel laufende Personen angeordnet ist. Es wurde bereits an anderer Stelle darauf hingewiesen, dass die Tunnelelemente konisch ausgebildet sind, wobei ein jedes Tunnelelement an einem stirnseitigen Ende einen größeren torbogenförmigen Rahmen aufweist, als am gegenüberliegenden Ende. Das heißt, dass wenn die Tunnelelemente auseinandergezogen werden, um einen Zugangstunnel zu bilden, besteht zwischen den inneren kleineren torbogenförmigen Rahmen und dem äußeren größeren torbogenförmigen Rahmen des benachbarten Tunnelelementes ein radialer Abstand. Um zu verhindern, dass bei Gedränge Passagiere stirnseitig gegen den kleineren torbogenförmigen Rahmen des einen Tunnelelementes laufen, ist an dem im Wesentlichen vertikal verlaufenden Schenkeln jeweils eine Leiteinrichtung angeordnet. Eine solche Leiteinrichtung ist vorteilhaft als um eine vertikale Achse verschwenkbarer Flügel ausgebildet, dass heißt, der Flügel ist ähnlich einer Schwingtür an dem im Umfang kleineren torbogenförmigen Rahmen angeordnet. Der Flügel steht unter der Last einer Feder, die dafür sorgt, dass der Flügel in Richtung des Rahmens des benachbarten Tunnelelements gedrückt wird. Vorteilhaft erstreckt sich der verschwenkbare Flügel in etwa über die Länge oder Höhe des Schenkels des torbogenförmigen Rahmens, um den den Zugangstunnel nutzenden Passagieren eine Kollision mit dem torbogenförmigen Rahmen zu ersparen.

Des Weiteren ist vorgesehen, dass der radiale Abstand zwischen dem kleineren und dem größeren torbogenförmigen Rahmen zweier Tunnelelemente derart ist, dass in im Wesentlichen auseinandergezogenen Zustand zweier diese winklig zueinanderstehen können. Das heißt, dass der Umfang der beiden torbogenförmigen Rahmen der durchaus signifikant unterschiedlich ist, da nur dadurch die Tunnelelemente relativ zueinander winklig verschoben werden können, um eine flexible Formgestaltung des Zugangstunnels insgesamt zu ermöglichen.

Anhand der Zeichnungen wird die Erfindung nachstehend beispielhaft näher erläutert.
- Fig. 1: zeigt einen Zugangstunnel mit mehreren Elementen im auseinandergezogenen Zustand in perspektivischer Darstellung;
- Fig. 1a: zeigt den Zugangstunnel gemäß Fig. 1 in gebogenem Zustand in umgekehrter Reihenfolge der Tunnelelemente;

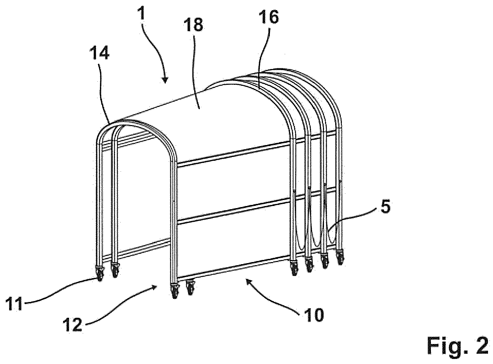

- Fig. 2: zeigt eine Darstellung gemäß Fig. 1, wobei die Tunnelelemente ineinandergeschoben sind;
- Fig. 3: zeigt zwei Tunnelelemente, wobei durch einen Ausbruch Flügel als Leiteinrichtung sichtbar sind;
- Fig. 4: zeigt einen Schnitt gemäß der Linie IV-IV aus Fig. 3;

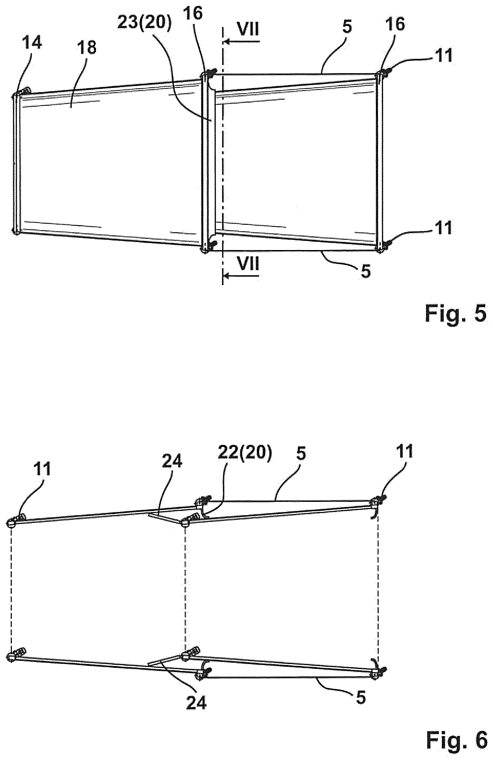

- Fig. 5: zeigt eine Ansicht von oben auf zwei Tunnelelemente im auseinandergezogenen Zustand;
- Fig. 6: zeigt einen Horizontalschnitt in einer Ansicht von oben.

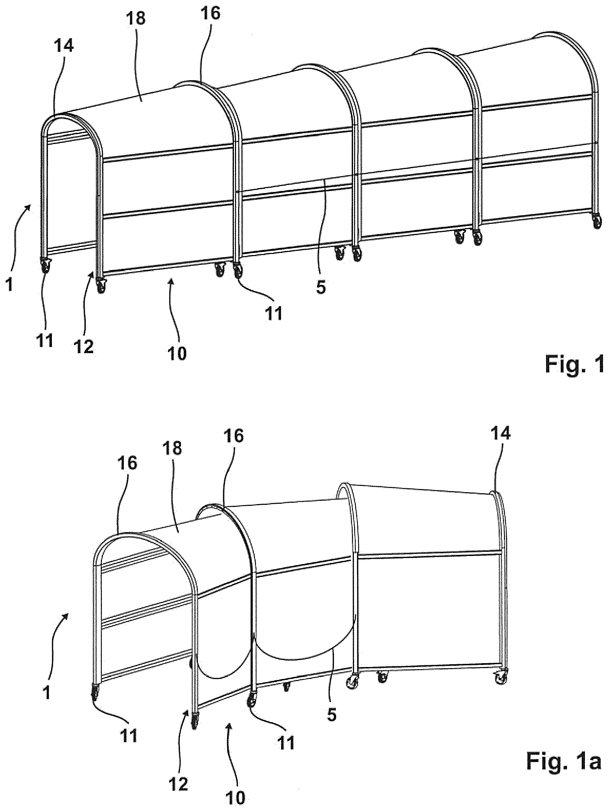

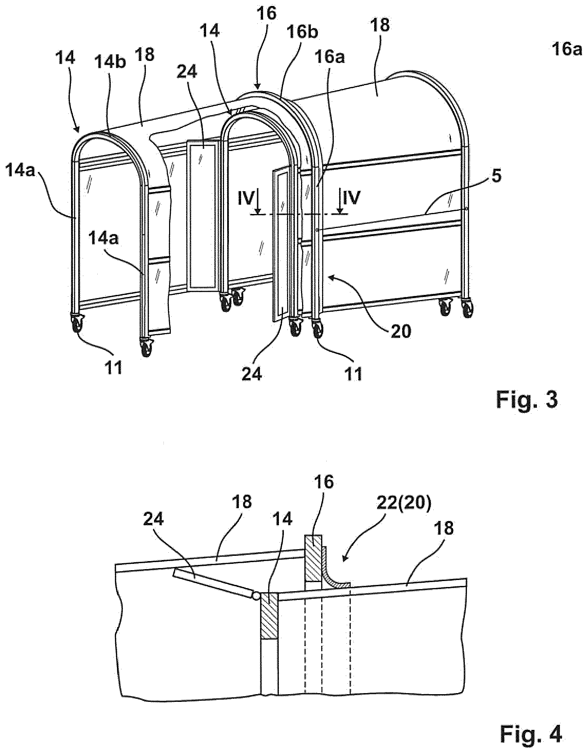

Aus Fig. 1 ergibt sich ein Zugangstunnel 1 mit insgesamt vier Tunnelelementen 10. Ein jedes Tunnelelement 10 weist ein Gestell 12 mit vier Rollen 11 auf, wobei das Gestell 12 an einem Ende einen kleineren torbogenförmigen Rahmen 14 und am gegenüberliegenden Ende einen demgegenüber größeren torbogenförmigen Rahmen 16 aufweist. Der Begriff "kleinere torbogenförmige Rahmen" ist hierbei im Verhältnis zu dem Begriff "größerer torbogenförmiger Rahmen" zu verstehen, dass heißt, der kleinere torbogenförmige Rahmen weist einen geringeren Umfang auf, als der im Verhältnis dazu größere torbogenförmige Rahmen 16, sodass sich ein konischer Verlauf der einzelnen Tunnelelemente 10 in Längsrichtung ergibt, wie dies unter anderem in Fig. 1 dargestellt ist. In Fig. 1a ist die Kurvenfahrt eines Zugangstunnels 1 mit mehreren Tunnelelementen 10 dargestellt. Das mit 12 bezeichnete Gestell weist auf seinem Umfang eine Verkleidung 18 auf, beispielsweise aus einem durchsichtigen Kunststoff. Die einzelnen Tunnelelemente 10 sind untereinander durch Seile 5 zur Begrenzung des Auszugs der Tunnelelemente untereinander verbunden. Ein solches Seil befindet sich zu jeder Seite der Tunnelelemente. Die Befestigung der Seile 5 erfolgt zwischen den vertikalen Schenkeln 14a und 16a der torbogenförmigen Rahmen 14 und 16 (siehe auch Fig. 3). Die beiden Schenkel 14a, 16a eines jeden torbogenförmigen Rahmens 14, 16 sind im Dachbereich durch jeweils einen bogenförmigen Steg 14b, 16b miteinander verbunden. Der im Verhältnis zum kleineren torbogenförmigen Rahmen 14 größere torbogenförmige Rahmen 16 weist zur Überbrückung des Abstandes zwischen zwei Tunnelelementen 10 im auseinandergezogenen Zustand dieser Tunnelelemente (siehe Fig. 3) eine ebenfalls torbogenförmige Abdichtung 20 auf. Die torbogenförmige Abdichtung 20 ist im Bereich der Schenkel 16a des größeren torbogenförmigen Rahmens 16 mit 22 bezeichnet, und liegt an der Verkleidung des jeweils benachbarten Tunnelelementes 10 an (Fig. 4). Die torbogenförmige Abdichtung 20 umfasst einen Festigkeitsträger, beispielsweise ein Gewebe, dass zumindest einseitig mit einem Elastomer beschichtet ist. Dieses Tuch ist leicht verformbar und legt sich, wie bereits ausgeführt, an die Verkleidung des benachbarten Tunnelelementes 10 an.

Die torbogenförmige Abdichtung 20 im Dachbereich (Pfeil 23) ist in sich elastisch, also nach Art eines Gummizuges ausgebildet, wodurch erreicht wird, dass die torbogenförmige Abdichtung 20 im Dachbereich unter Spannung auf der Verkleidung 18 des benachbarten Tunnelelementes aufliegt. Dies vor dem Hintergrund, dass im Dachbereich insbesondere kein Wasser in den Übergangsbereich zweier Tunnelelemente eintreten können soll.

Betrachtet man nunmehr die Fig. 3 noch einmal, so erkennt man den an den vertikalen Schenkeln 14a des im Verhältnis zum torbogenförmigen Rahmen 16 kleineren torbogenförmigen Rahmen 14 die als Leiteinrichtung ausgebildeten Flügel 24, die um eine vertikale Achse verschwenkbar an den Schenkeln 14a angeordnet sind. Die Gelenke der Flügel zur Verbindung mit den Schenkeln 14a sind hierbei derart ausgebildet, dass die Flügel 24 in jeder vorgegebenen Stellung stehen bleiben. Diese Flügel 24 dienen als Leiteinrichtung für durch den Zugangstunnel laufende Passagiere, um eine Kollision der Passagiere mit dem torbogenförmigen Rahmen 14 zu vermeiden.

### Bezugszeichenliste:

- 1: Zugangstunnel
- 5: Seile
- 10: Tunnelelement
- 11: Rollen
- 12: Gestell
- 14: Rahmen
- 14a: Schenkel
- 14b: Steg
- 16: Rahmen
- 16a: Schenkel
- 16b: Steg
- 18: Verkleidung
- 20: Abdichtung
- 22: Abdichtung Schenkel
- 23: Abdichtung Dach (Pfeil)
- 24: Flügel

## Patentansprüche

1. Zugangstunnel (1) zu einem Flugzeug, umfassend mehrere Tunnelelemente (10), die miteinander verschieblich in Verbindung stehen,
**dadurch gekennzeichnet,**
**dass** eine Mehrzahl der (10) in Richtung der Längsachse eines jeden Tunnelelementes (10) konisch zulaufend ausgebildet sind, sodass die Tunnelelemente (10) ineinanderschiebbar sind.

2. Zugangstunnel (1) zu einem Flugzeug nach Anspruch 1,
**dadurch gekennzeichnet,**
**dass** die Tunnelelemente (10) frei relativ zueinander verschieblich sind.

3. Zugangstunnel (1) zu einem Flugzeug nach einem der voranstehenden Ansprüche,
**dadurch gekennzeichnet,**
**dass** die Tunnelelemente (10) zur Begrenzung des Auszugs durch Seile (5), Ketten oder Ähnliches miteinander verbunden sind.

4. Zugangstunnel (1) zu einem Flugzeug nach einem der voranstehenden Ansprüche,
**dadurch gekennzeichnet,**
**dass** das Tunnelelement (10) ein Gestell (12) umfasst, auf dem eine Verkleidung (18) angeordnet ist.

5. Zugangstunnel (1) zu einem Flugzeug nach Anspruch 4,
**dadurch gekennzeichnet,**
**dass** das Gestell (12) zu beiden Enden einen torbogenförmigen Rahmen (14, 16) aufweist, wobei zur konischen Ausbildung des Tunnelelementes (10) der eine torbogenförmige Rahmen (14) in Bezug auf den Umfang kleiner ist, als der andere torbogenförmige Rahmen (16).

6. Zugangstunnel (1) zu einem Flugzeug nach Anspruch 5,
**dadurch gekennzeichnet,**
**dass** der im Umfang größere der torbogenförmigen Rahmen (16) eine entsprechend torbogenförmige Abdichtung (20) zu dem benachbarten Tunnelelement (10) aufweist.

7. Zugangstunnel (1) zu einem Flugzeug nach Anspruch 6,
**dadurch gekennzeichnet,**
**dass** die torbogenförmige Abdichtung (20) flexibel ausgebildet ist.

8. Zugangstunnel (1) zu einem Flugzeug nach Anspruch 6 oder 7,
**dadurch gekennzeichnet,**
**dass** die torbogenförmige Abdichtung (20) zumindest im Dachbereich (Pfeil 23) des Tunnelelementes (10) elastisch ausgebildet ist.

9. Zugangstunnel (1) zu einem Flugzeug nach einem der Ansprüche 6 bis 8,
**dadurch gekennzeichnet,**
**dass** die torbogenförmige Abdichtung (20) einen zumindest zu einer Seite mit einem Elastomer beschichteten Festigkeitsträger aufweist.

10. Zugangstunnel (1) zu einem Flugzeug nach Anspruch 8,
**dadurch gekennzeichnet,**
**dass** die elastisch ausgebildete torbogenförmige Abdichtung (20) im Dachbereich des Tunnelelements (10) unter Spannung auf der Verkleidung (18) des benachbarten Tunnelelements (10) aufliegt.

11. Zugangstunnel (1) zu einem Flugzeug nach einem der Ansprüche 5 bis 10,
**dadurch gekennzeichnet,**
**dass** der im Umfang kleinere torbogenförmige Rahmen (14) zwei im Wesentlichen vertikal verlaufende Schenkel (14a) aufweist, an denen jeweils eine Leiteinrichtung angeordnet ist.

12. Zugangstunnel (1) zu einem Flugzeug nach Anspruch 11,
**dadurch gekennzeichnet,**
**dass** die Leiteinrichtung als um eine vertikale Achse verschwenkbarer Flügel (24) ausgebildet ist.

13. Zugangstunnel (1) zu einem Flugzeug nach Anspruch 12,
**dadurch gekennzeichnet,**
**dass** der verschwenkbare Flügel (24) sich etwa über die Länge des Schenkels (14a) des torbogenförmigen Rahmens (14) erstreckt.

14. Zugangstunnel (1) zu einem Flugzeug nach einem der Ansprüche 5 bis 13,
**dadurch gekennzeichnet,**
**dass** der radiale Abstand zwischen dem kleineren und größeren torbogenförmigen Rahmen (14, 16) zweier Tunnelelemente (10) derart ist, dass in im Wesentlichen auseinandergezogenen Zustand zweier Tunnelelemente (10), diese winklig zueinanderstehen können.

## Claims

1. An access tunnel (1) to an aircraft, comprising several tunnel elements (10) that are displaceably connected to each other,
**characterized in that**,
a plurality of the tunnel elements (10) are formed so that they taper conically in the direction of the longitudinal axis of each tunnel element (10), so that the tunnel elements (10) can be pushed into each other.

2. The access tunnel (1) to an aircraft according to claim 1,
**characterized in that**
the tunnel elements (10) are freely displaceable relative to each other.

3. The access tunnel (1) to an aircraft according to one of the aforementioned claims,
**characterized in that**
the tunnel elements (10) are connected to each other by ropes (5), chains or the like to limit extension.

4. The access tunnel (1) to an aircraft according to one of the aforementioned claims,
**characterized in that**
the tunnel element (10) comprises a framework (12), on which a cover (18) is arranged.

5. The access tunnel (1) to an aircraft according to claim 4,
**characterized in that**
the framework (12) comprises an archway-shaped frame (14, 16) at both ends, wherein one archway-shaped frame (14) is smaller with respect to a circumference than the other archway-shaped frame (16), thereby providing the conical tapering of each tunnel element (10).

6. The access tunnel (1) to an aircraft according to claim 5,
**characterized in that**
the archway-shaped frame (16) which is larger in circumference has a correspondingly archway-shaped seal (20) against the adjacent tunnel element (10).

7. The access tunnel (1) to an aircraft according to claim 6,
**characterized in that**
the archway-shaped seal (20) is flexible.

8. The access tunnel (1) to an aircraft according to claim 6 or 7,
**characterized in that**
the archway-shaped seal (20) is elastic at least in the roof region (arrow 23) of the tunnel element (10).

9. The access tunnel (1) to an aircraft according to one of the claims 6 to 8,
**characterized in that**
the archway-shaped seal (20) has a reinforcement coated with an elastomer on at least one side.

10. The access tunnel (1) to an aircraft according to claim 8,
**characterized in that**
the elastic archway-shaped seal (20) in the roof region of the tunnel element (10) rests under strain on the cover (18) of the adjacent tunnel element (10).

11. The access tunnel (1) to an aircraft according to one of the claims 5 to 10,
**characterized in that**
the archway-shaped frame (14) which is smaller in circumference has two substantially vertically extending limbs (14a), on which a respective guide device is arranged.

12. The access tunnel (1) to an aircraft according to claim 11,
**characterized in that**
the guide device is designed as a wing (24) that is pivotable about a vertical axis.

13. The access tunnel (1) to an aircraft according to claim 12,
**characterized in that**
the pivotable wing (24) extends approximately along the length of the limb (14a) of the archway-shaped frame (14).

14. The access tunnel (1) to an aircraft according to one of the claims 5 to 13,
**characterized in that** the radial spacing between the smaller and larger archway-shaped frames (14,16) of two tunnel elements (10) is such that, in a substantially extended state of two tunnel elements (10), the latter can stand at an angle with respect to the other.

## Revendications

1. Tunnel d'accès (1) à un avion, comportant plusieurs éléments de tunnel (10) reliés de manière déplaçable,
**caractérisé en ce que**
une pluralité d'éléments de tunnel (10) sont de forme conique effilés dans la direction de l'axe longitudinal de chaque élément de tunnel (10), de sorte que les éléments de tunnel (10) peuvent s'emboîter les uns dans les autres.

2. Tunnel d'accès (1) à un avion selon la revendication 1,
**caractérisé en ce que**
les éléments de tunnel (10) sont librement déplaçables les uns par rapport aux autres.

3. Tunnel d'accès (1) à un avion selon l'une quelconque des revendications précédentes, **caractérisé en ce que** les éléments de tunnel (10) sont reliés par des cordes (5), des chaînes ou d'autres moyens similaires pour limiter l'extension.

4. Tunnel d'accès (1) à un avion selon l'une quelconque des revendications précédentes, **caractérisé en ce que**
l'élément de tunnel (10) comporte une armature (12), sur laquelle est disposé un revêtement (18).

5. Tunnel d'accès (1) à un avion selon la revendication 4,
**caractérisé en ce que**
l'armature (12) comprend un cadre (14, 16) en forme d'arche à chaque extrémité, où l'un des cadres (14) en forme d'arche présente une circonférence plus petite que l'autre cadre (16) en forme d'arche de façon à obtenir la forme conique de l'élément de tunnel (10).

6. Tunnel d'accès (1) à un avion selon la revendication 5,
**caractérisé en ce que**
le cadre (16) en forme d'arche de plus grande circonférence comprend un joint d'étanchéité (20) en forme d'arche correspondant à l'élément de tunnel (10) adjacent.

7. Tunnel d'accès (1) à un avion selon la revendication 6,
**caractérisé en ce que**
le joint d'étanchéité (20) en forme d'arche est flexible.

8. Tunnel d'accès (1) à un avion selon la revendication 6 ou 7,
**caractérisé en ce que**
le joint d'étanchéité (20) en forme d'arche est élastique au moins dans la région du toit (flèche 23) de l'élément de tunnel (10).

9. Tunnel d'accès (1) à un avion selon l'une des revendications 6 à 8,
**caractérisé en ce que**
le joint d'étanchéité (20) en forme d'arche comprend un renforcement revêtu d'un élastomère sur au moins un côté.

10. Tunnel d'accès (1) à un avion selon la revendication 8,
**caractérisé en ce que**
dans la région du toit de l'élément de tunnel (10), le joint d'étanchéité (20) en forme d'arche élastique repose sous tension sur le revêtement (18) de l'élément de tunnel (10) adjacent.

11. Tunnel d'accès (1) à un avion selon l'une des revendications 5 à 10,
**caractérisé en ce que**
le cadre (14) en forme d'arche de plus petite circonférence comprend deux branches (14a) s'étendant substantiellement verticalement, au niveau desquelles sont disposés respectivement un dispositif de guidage.

12. Tunnel d'accès (1) à un avion selon la revendication 11,
**caractérisé en ce que**
le dispositif de guidage prend la forme d'une aile (14) pouvant pivoter autour d'un axe vertical.

13. Tunnel d'accès (1) à un avion selon la revendication 12,
**caractérisé en ce que**
l'aile (24) pivotante s'étend approximativement sur la longueur de la branche (14a) du cadre (14) en forme d'arche.

14. Tunnel d'accès (1) à un avion selon l'une des revendications 5 à 13,
**caractérisé en ce que**
l'écart radial entre le plus petit et le plus grand cadre (14, 16) en forme d'arche de deux éléments de tunnel (10) est tel qu'ils forment un angle l'un par rapport à l'autre, quand les deux éléments de tunnel (10) sont à l'état substantiellement étendu.
